(19) Europäisches Patentamt

European Patent Office

Office européen des brevets

(11) **EP 0 994 571 A2**

(12) **EUROPEAN PATENT APPLICATION**

(43) Date of publication:
19.04.2000 Bulletin 2000/16

(51) Int. Cl.$^7$: **H04B 1/707**

(21) Application number: **99119921.7**

(22) Date of filing: **11.10.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **14.10.1998 JP 29254598**

(71) Applicant:
**MATSUSHITA ELECTRIC INDUSTRIAL CO., LTD.**
**Kadoma-shi, Osaka 571-8501 (JP)**

(72) Inventor: **Suzuki, Hidetoshi**
**Yokosuka-shi, Kanagawa 239-0847 (JP)**

(74) Representative:
**Grünecker, Kinkeldey,**
**Stockmair & Schwanhäusser**
**Anwaltssozietät**
**Maximilianstrasse 58**
**80538 München (DE)**

(54) **Despreading matched filter in CDMA reception apparatus**

(57) The despreading circuit of the present invention retains spread signals received by the radio section in the spread data retaining circuit, stops the radio section by the control section while the spread signals are retained, and then arranges the retained spread signals in time sequence and stores in the storage circuit with taps, multiplies these stored spread signals by respective spreading codes corresponding to other communication parties stored in the tap coefficient storage circuit through the multiplication circuit, and adds up these multiplication results by the addition circuit, thus performing despreading processing.

FIG.8

800: MATCHED FILTER (DESPREADING CIRCUIT)
804: STORAGE CIRCUIT WITH TAPS
805: MULTIPLICATION CIRCUIT
ADDITION CIRCUIT ( Σ )

EP 0 994 571 A2

Printed by Xerox (UK) Business Services
2.16.7 (HRS)/3.6

**Description**

BACKGROUND OF THE INVENTION

Field of the Invention

The present invention relates to a despreading circuit and despreading method in a CDMA reception apparatus used to maintain synchronization with a plurality of other communication parties using CDMA (Code Division Multiple Access) reception apparatuses in a mobile communication system, etc.

Description of the Related Art

CDMA transmission is a transmission system that transmits a transmission signal spread over a wideband signal using a spreading code faster than the information rate and then multi-accessed. This CDMA transmission system is divided into a direct sequence (DS) system that spreads a modulated signal with a high-speed rate spreading code and a frequency hopping (FH) system.

In the DS system, the apparatus on the receiving side gets an original narrow-band signal by despreading a wide-band received signal and carries out demodulation processing using the original narrow-band signal. In despreading processing, the apparatus on the receiving side detects a correlation between a spreading series of received signals and another spreading series generated by the receiving station.

As described in a conventional example of the International Publication No.WO95/10903, in order to apply the CDMA system to a cellular system, the system must ensure that signals of other communication parties can be treated as white noise.

In general, when a transmission signal is spread at spreading rate pg, the number of completely mutually orthogonal codes is pg. However, the number of codes is not enough if spreading is carried out only using a code series whose information data has a one-symbol cycle.

Therefore, in order to secure an infinite number of codes, this one-symbol cycle short code is generally multiplied by a long code having a very large cycle, which secures a nearly infinite number of spreading codes. Multiplying the long code makes a same carrier frequency available to neighboring cells. That is, the use of a long code makes it possible to identify a cell.

Here, the maintenance of synchronization established between a base station and a mobile station is explained with reference to the Unexamined Japanese Patent Publication No8-237728.

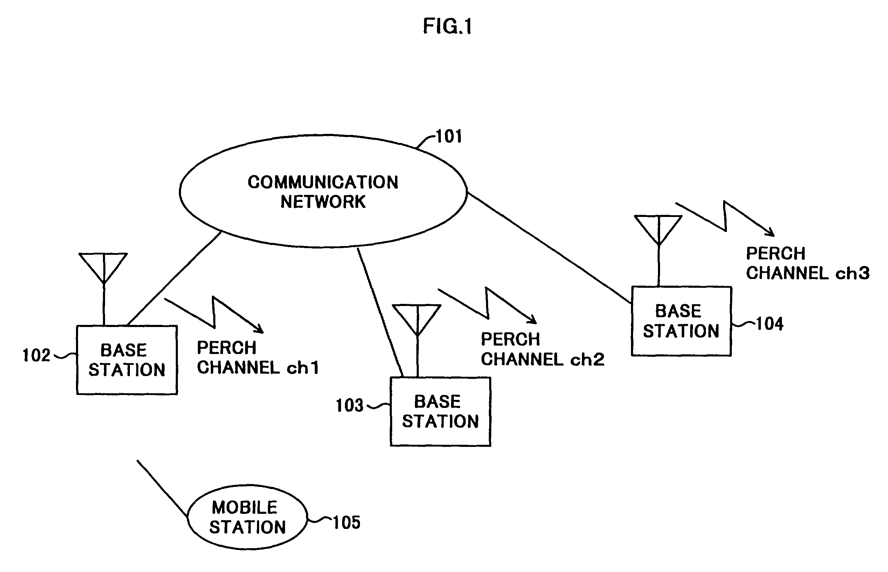

FIG.1 is a schematic diagram showing a configuration of a CDMA-based mobile communication system. In this FIG.1, a plurality of base stations, for example, base stations 102, 103 and 104 are connected to communication network 101 such as a public network via cables. Mobile station 105 carries out radio communications with one of base stations 102 to 104 by establishing synchronization.

Mobile station 105 receives perch channels ch1 to ch3 transmitted from base stations 102 to 104 respectively and can recognize the reception levels of perch channels ch1 to ch3 of base stations 102 to 104 and the reception timings indicating from where the code of each base station starts. However, although the present explanation is given using a term "perch channel" as the channel that can be used for level measurement and time tracking, the present explanation is not limited to perch channels only.

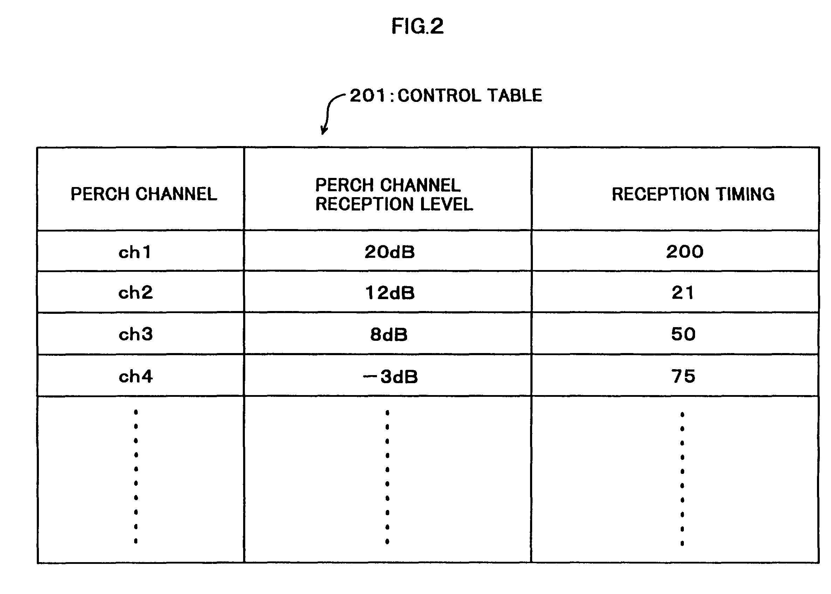

Perch channels ch1 to ch3, reception levels and reception timings of respective perch channels are maintained by mobile station 105 by the control section of mobile station 105 storing control table 201 as shown in FIG.2.

Furthermore, mobile station 105 provides timings of synchronization with base stations 102 to 104 by creating their respective delay profiles.

When mobile station 105 carries out handover and sends/receives a call, which of base stations 102 to 104 mobile station 105 enters into communication with is determined by base stations 102 to 104 or mobile station 105 using the information on the reception levels and timings positions above.

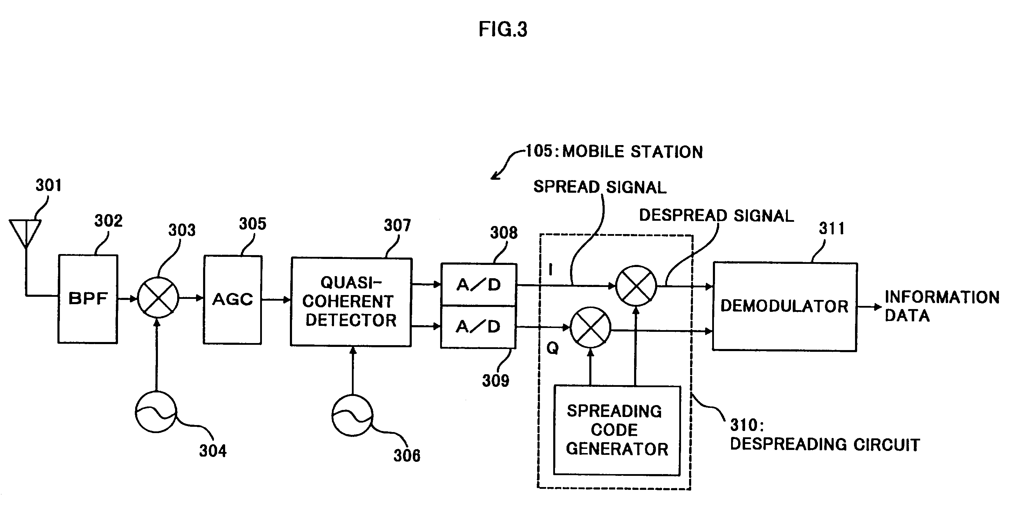

Then, a configuration example of mobile station 505 is shown in FIG.3 and explained.

As shown in FIG.3, mobile station 105 comprises antenna 301, BPF (Band Pass Filter) 302, mixer 303, local oscillator 304, AGC (Automatic Gain Control) 305, local oscillator 306, quasi-coherent detector 307, A/D converters 308 and 309, despreading circuit 310 and demodulator 311.

In FIG.3, the signal received (received signal) by antenna 301 is subjected to band restriction by BPF 302 to an extent that will not cause this received signal to be distorted. This band-restricted received signal is mixed by mixer 303 with a local oscillation signal output from local oscillator 304 and frequency-converted.

The level of the frequency-converted signal is adjusted to an appropriate level by AGC 305. Here, BPF 302 is provided to secure normal operation of AGC 305.

Then, the signal whose level has been adjusted to the appropriate level by AGC 305 is subjected to quasi-coherent detection by quasi-coherent detector 307 according to a local signal from local oscillator 306. The local signal above has the same frequency as that of the carrier wave of the received signal.

An Ich signal and a Qch signal obtained by this quasi-coherent detection are converted to digital spread data by A/D (Analog/Digital) converters 308 and 309, respectively. These spread data are despread by despreading circuit 310 and the desired signal is extracted. The desired information data are obtained by demodulator 311 demodulating the despread signal.

On the other hand, a matched filter is sometimes used as despreading circuit 310. This matched filter is explained by quoting a description in the International Publication No.WO95/10903.

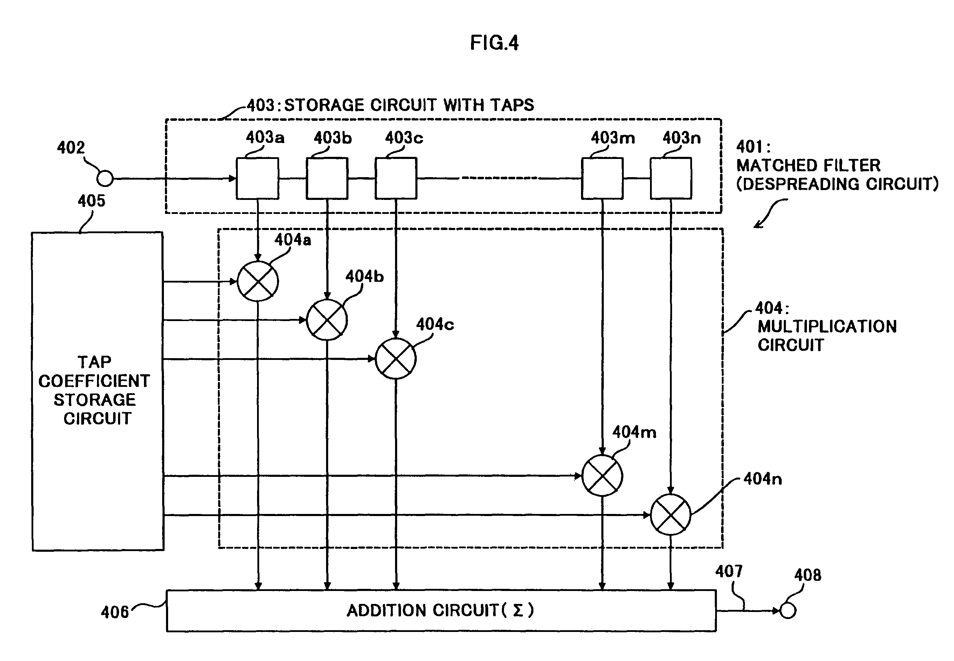

FIG.4 is a block diagram showing a configuration of a matched filter of a conventional CDMA reception apparatus.

The received signal input to input terminal 402 is input to storage circuit with taps 403. The output codes of taps 403a to 403n, which are the storage sections of storage circuit with taps 403, are multiplied by reference spreading codes stored in tap coefficient storage circuit 405 through multipliers 404a to 404n in multiplication circuit 404. These multiplication results are added up by addition circuit 406 and the addition result is output from output terminal 408 as correlation value 407.

Then, how such matched filter 401 is used to measure the reception levels of a plurality of base stations above, base stations 102 to 104 in this case, and perform time tracking to provide timings for synchronization with the base stations above is explained.

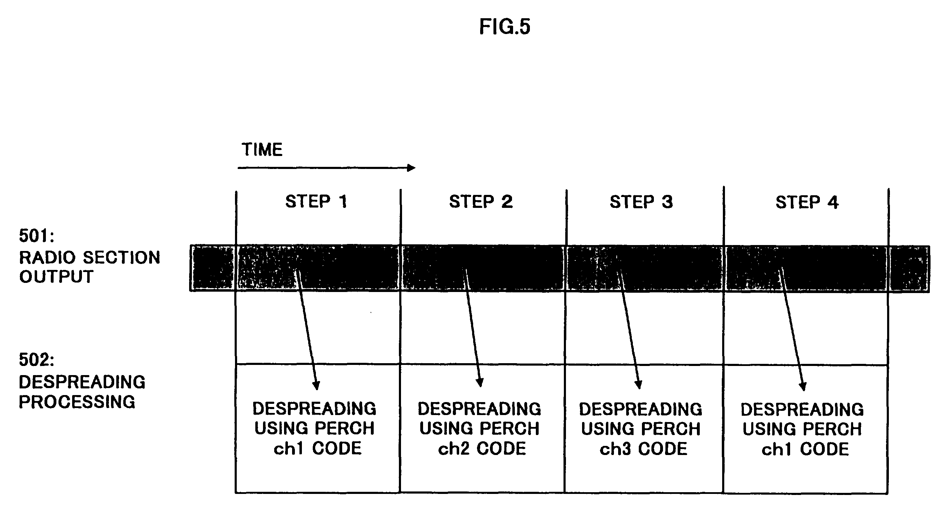

FIG.5 is a timing chart of radio section output 501 and despreading processing 502 indicating the spread data output from A/D converters 308 and 309 in mobile station 105 shown in FIG.3.

Here, the radio section of mobile station 105 refers to the section made up of antenna 301, BPF 302, mixer 303, local oscillator 304, AGC 305, local oscillator 306, quasi-coherent detector 307, A/D converters 308 and 309.

How despreading processing 502 for perch channels ch1 to ch3 is performed is explained in the following 4 steps.

In step 1, despreading is carried out using the spread data received during this step 1 and the reference spreading code of perch channel ch1.

As a result, mobile station 105 can measure the reception level of perch channel ch1 from base station 102 in FIG.1. Furthermore, mobile station 105 can perform time tracking by gradually shifting points at which signals are received and detecting the timing with the highest reception level.

In step 2, despreading is carried out using the spread data received during this step 2 and the reference spreading code of perch channel ch2.

As a result, mobile station 105 can measure the reception level of perch channel ch2 from base station 103 in FIG.1. Furthermore, mobile station 105 can perform time tracking by gradually shifting points at which signals are received and detecting the timing with the highest reception level.

In step 3, despreading is carried out using the spread data received during this step 3 and the reference spreading code of perch channel ch3.

As a result, mobile station 105 can measure the reception level of perch channel ch3 from base station 104 in FIG.1. Furthermore, mobile station 105 can perform time tracking by gradually shifting points at which signals are received and detecting the timing with the highest reception level.

In step 4, when time tracking and measurement of the reception levels corresponding to three base stations 102 to 104 are performed hereafter, steps 1 to 3 above are repeated.

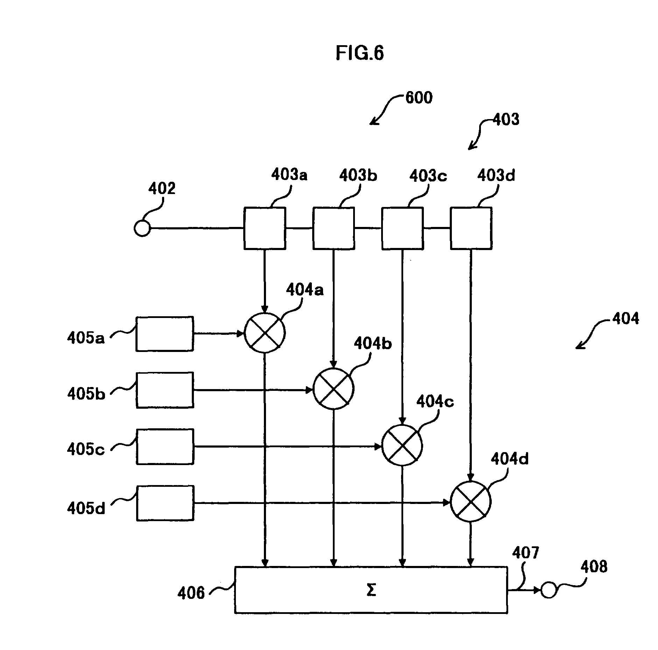

Then, FIG.6 shows the configuration of matched filter 600 when the number of taps is 4 and the operation of matched filter 600 is explained.

A received signal input from input terminal 402 is input to taps 403a, 403b, 403c and 403d of storage circuit with taps 403. The outputs of taps 403a to 403d are multiplied through multipliers 404a, 404b, 404c and 404d of multiplication circuit 404 by the reference spreading codes stored in tap coefficient storage circuits 405a, 405b, 405c and 405d, respectively. These multiplication results are added up by addition circuit 406 and the addition result is output from output terminal 408 as correlation value 407.

Here, suppose the reference spreading codes of the base station stored in tap coefficient storage circuits 405a to 405d are C(0), C(1), C(2), C(3), ... and the received signals input from input terminal 402 are expressed as x(0), x(1), x(2), x(3), ... in time sequence. Then, the despreading processing operation is explained in steps 1 to 3 below.

In step 1, reference spreading codes C(0) to C(3) stored in tap coefficient storage circuits 405a to 405d and signals x(0) to x(3) of taps 403a to 403d are multiplied through multiplication circuits 404a to 404d and the multiplication results are added up by addition circuit 406.

In this case, the signal output as correlation value 407 is given in following expression (1).

$$S(0) = x(0)C(0) + x(1)C(1) + x(2)C(2) + x(3)C(3) \quad (1)$$

In step 2, suppose the spreading codes remain unchanged and a new received signal x(4) is input to storage circuit with taps 403. Then, taps 403a to 403d contain x(1), x(2), x(3) and x(4), respectively.

In this case, the signal output as correlation value 407 is given in following expression (2).

$$S(1) = x(1)C(0) + x(2)C(1) + x(3)C(2) + x(4)C(3) \quad (2)$$

In step 3, suppose the spreading codes remain unchanged and a new received signal x(5) is input to storage circuit with taps 403. Then, taps 403a to 403d contain x(2), x(3), x(4) and x(5), respectively.

In this case, the signal output as correlation value 407 is given in following expression (3).

$$S(2) = x(2)C(0) + x(3)C(1) + x(4)C(2) + x(5)C(3) \quad (3)$$

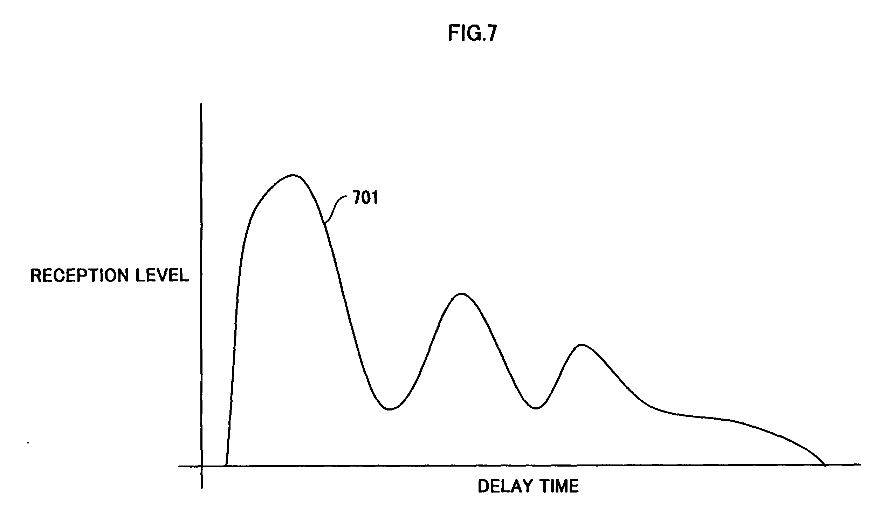

By repeating such steps 1 to 3, outputs correlation values 407 are output sequentially. The level of correlation of a signal at each given time is recognized through these correlation values 407, and as shown in FIG.7, a delay profile showing the relationship between a delay time and reception level of a received wave from a base station is created.

When creating a delay profile for another base station, the reference spreading codes stored in tap coefficient storage circuits 405a to 405d are D(0), D(1), D(2) and D(3), respectively.

That is, mobile station 105 establishes synchronization with base stations using correlation value 701 obtained by the despreading processing explained above and creates delay profiles when performing measurement of the reception levels and time tracking.

Furthermore, as shown in FIG.7, the reason why delay profile curve 701 contains a plurality of mountains is that not only direct waves but also reflected waves from buildings and mountains are propagated toward the mobile station. Thus, mobile station 105 creates delay profile 701 and controls the timings of other base stations on the other end of communication based on the relationship between this reception level and delay time.

Then, regarding the method of initial synchronization after despreading processing by the conventional CDMA reception apparatus, the method of identifying a code when the phase of the spreading code is known but the type of the code is unknown is explained by quoting a summary of the International Publication No.WO96/20544.

An a priori signal whose value of correlation with a long code is virtually zero and whose self-correlation value changes in a triangular form is inserted into a signal spread with the long code and the timing of starting the reception of this a priori code is detected to estimate the reception phase of the long code.

The apparatus on the transmitting side comprises an a priori code insertion circuit and the apparatus on the receiving side comprises an a priori code replica generator.

The conventional CDMA reception apparatus comprises a plurality of correlators that obtain values of correlation between received signals and replicas of a priori signals and a circuit that obtains the maximum correlation value from among the correlation values of these correlators and the corresponding reception timings, estimates the timing of starting the reception of an a priori signal based on the reception start timing that gives the maximum correlation value and estimates the time at which a certain period of time has elapsed after this estimated value as the reception phase point of the long code.

However, the conventional CDMA communication apparatus has the problem described below. That is, as the number of cellular system subscribers increases, new base stations will be installed one after another. Here, as described above, the mobile station must continue operating the radio section to maintain synchronization using despreading processing during standby reception as well. Thus, as the number of base stations increases, the operation time of the radio section at the mobile station also increases, resulting in an increase of power consumption of the mobile station.

Furthermore, the conventional despreading circuit creates a delay profile when the received signal is changed to x(n), x(n+1), x(n+2) and x(n+3), and thus the radio status at different phase points in the delay profile does not remain the same. As a result, the conventional despreading circuit cannot perform more accurate time tracking.

Moreover, in the method of initial synchronization after despreading processing by the conventional CDMA reception apparatus, that is, in the method of identifying a code when the phase of the spreading code is known but the type of the code is unknown, the conventional CDMA reception apparatus estimates the reception phase of the long code using the a priori signal. However, identifying the data of the corresponding spread signal requires the type of the long code to be identified and this processing of identifying the type of the long code takes time. As a result, the conventional CDMA reception apparatus takes a long time for initial synchronization, requiring considerable time to transit to an intermittent reception state. Thus, with the conventional CDMA reception apparatus it is difficult to reduce power consumption.

Moreover, in a system that cannot operate AFC (Automatic Frequency Control) after the initial synchronization is completed until demodulation of some data is started, it is necessary to improve the precision of crystal while AFC is not applied. This makes it difficult to reduce costs of the CDMA reception apparatus.

SUMMARY OF THE INVENTION

It is an objective of the present invention to provide a despreading circuit and despreading method in a CDMA reception apparatus capable of suppressing increases in power consumption and reducing the time for identifying the type of a long code, by enabling measurement of reception levels and time tracking of a plurality of base stations without increasing the operation time of the radio section even if the number of base stations increases.

The above objective is achieved by maintaining spread signals received by the radio section, stopping the operation of the above radio section while this spread signal is maintained, then performing despreading processing by sequentially multiplying these spread signals maintained and rearranged in time sequence by the spreading codes corresponding to other communication parties.

BRIEF DESCRIPTION OF THE DRAWINGS

The above and other objects and features of the invention will appear more fully hereinafter from a consideration of the following description taken in connection with the accompanying drawing wherein one example is illustrated by way of example, in which;

FIG.1 is a schematic diagram showing a configuration of a CDMA-based mobile communication system;

FIG.2 is a control table of a list of base stations on the other end of communication maintained by the mobile station (CDMA reception apparatus) in the mobile communication system shown in FIG.1;

FIG.3 is a block diagram showing a configuration of a conventional mobile station (CDMA reception apparatus) in the mobile communication system shown in FIG.1;

FIG.4 is a block diagram showing a configuration of a despreading circuit (matched filter) in the conventional mobile station shown in FIG.3;

FIG.5 is a timing chart of the radio section output and despreading processing at the conventional mobile station shown in FIG.3;

FIG.6 is a block diagram showing a configuration of a matched filter (despreading circuit) of the conventional CDMA reception apparatus when the number of taps is 4;

FIG.7 is a delay profile diagram showing a relationship between a delay time and reception level of a received wave from a base station;

FIG.8 is a block diagram showing a configuration of a CDMA reception apparatus according to Embodiment 1 of the present invention;

FIG.9 is a timing chart of the radio section output indicating spread data output from the radio section of the CDMA reception apparatus according to Embodiment 1 and the despreading processing by the matched filter in the CDMA reception circuit according to Embodiment 1;

FIG.10 is a block diagram showing the configuration of the matched filter (despreading circuit) of the CDMA reception apparatus according to Embodiment 1 when the number of taps is 4; and

FIG.11 is a block diagram showing a configuration of a CDMA reception apparatus according to Embodiment 2 of the present invention.

DETAILED DESCRIPTION OF THE PREFERRED EMBODIMENTS

With reference now to the attached drawings, the embodiments of the present invention are explained in detail below.

(Embodiment 1)

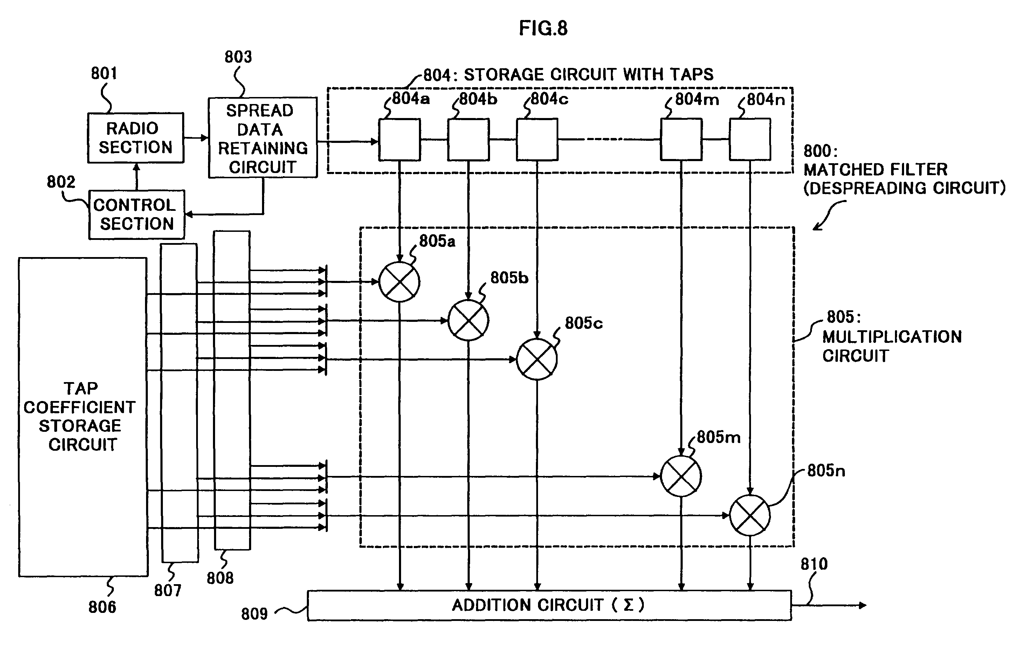

FIG.8 is a block diagram showing a configuration of a CDMA reception apparatus according to Embodiment 1 of the present invention. Here, the CDMA reception apparatus according to the present embodiment is explained by taking as an example the case where this CDMA reception apparatus is incorporated in mobile station 105 shown in FIG.1 and this mobile station 105 carries out communications with base stations 102 to 104.

The CDMA reception apparatus according to Embodiment 1 shown in FIG.8 has a configuration using a matched filter as the despreading circuit and also has a configuration using matched filter 800 instead of despreading circuit 310 in mobile station 105 shown in FIG.3.

Radio section 801 shown in FIG.8 also comprises antenna 301, BPF 302, mixer 303, local oscillator 304, AGC 305, local oscillator 306, quasi-coherent detector 307. A/D converters 308 and 309 in mobile station 105 shown in FIG.3.

In FIG.8, the spread data received by radio section 801 are retained by spread data retaining circuit 803 and input to storage circuit with taps 804. When the spread data are retained by spread data retaining circuit 803, control section 802 stops the operation of radio section 801.

Each of the output codes from taps 804a to 804n that are the storage means in storage circuit with taps 804 is multiplied through multipliers 805a to 805n in multiplication circuit 805 by one of the reference spreading code (tap coefficient) of perch channel ch1 stored in tap coefficient storage circuit 806, reference spreading code of perch channel ch2 stored in tap coefficient storage circuit 807 and reference spreading code of perch channel ch3 stored in tap coefficient storage circuit 808.

These multiplication results are added up by addition circuit 809 and the addition result is output as correlation value 810 to a processing circuit in the subsequent stage, which is not shown in the figure.

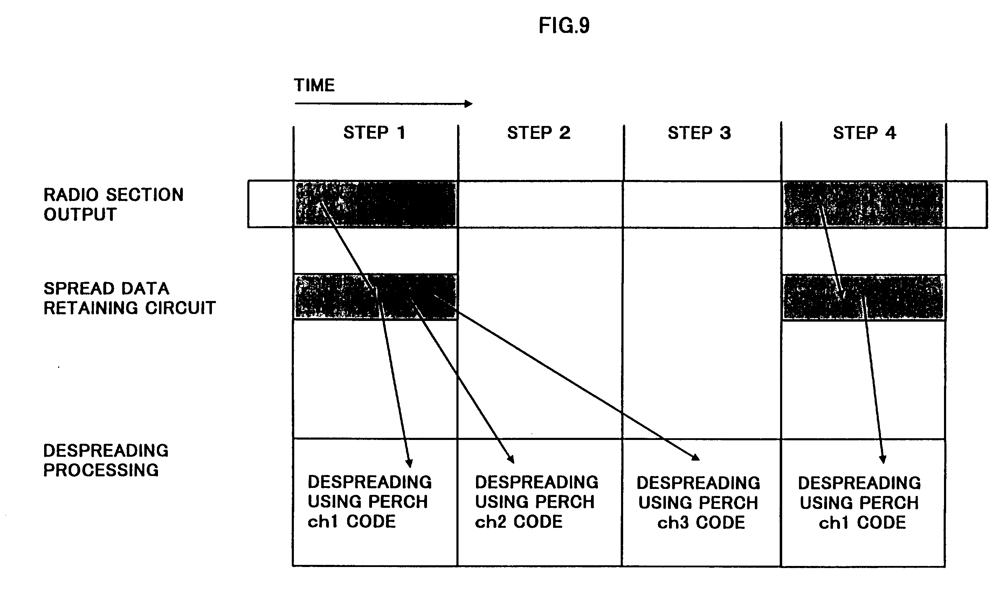

FIG.9 shows a timing chart of the radio section output indicating the spread data output from radio section 801 and the dispersing processing by matched filter 800 in the CDMA reception circuit according to Embodiment 1.

How the despreading processing in perch channels ch1 to ch3 is carried out is explained in the following four steps shown in FIG.9.

In step 1, control section 802 operates radio section 801 so that radio section 801 may output spread data. The spread data output from radio section 801 are retained by spread data retaining circuit 803 and supplied to storage circuit with taps 804 at the same time. When the spread data are retained in spread data retaining circuit 803, control section 102 stops the operation of radio section 801.

Then, multiplication circuit 805 multiplies an output code from storage circuit with taps 804 by a reference spread code of perch channel ch1 stored in tap coefficient storage circuit 806, carrying out despreading processing.

This allows mobile station 105 to measure the reception level of perch channel ch1 from base station 102 shown in FIG.1. Mobile station 105 can also perform time tracking by gradually shifting the position of reference spreading code and detecting the timing corresponding to the highest reception level.

In step 2, the data retained in spread data retaining circuit 803 are supplied to storage circuit with taps 804 again.

Then, multiplication circuit 805 multiplies an output code from storage circuit with taps 804 by a reference spread code of perch channel ch2 stored in tap coefficient storage circuit 807, carrying out despreading processing.

This allows mobile station 105 to measure the reception level of perch channel ch2 from base station 103 shown in FIG.1. Mobile station 105 can also perform time tracking by gradually shifting the position of reference spreading code and detecting the timing corresponding to the highest reception level.

In step 3, the data retained in spread data retaining circuit 803 in step 1 are supplied to storage circuit with taps 804 again.

Then, multiplication circuit 805 multiplies an output code from storage circuit with taps 804 by a reference spread code of perch channel ch3 stored in tap coefficient storage circuit 808, carrying out despreading processing.

This allows mobile station 105 to measure the reception level of perch channel ch3 from base station 104 shown in FIG.1. Mobile station 105 can also perform time tracking by gradually shifting the position of reference spreading code and detecting the timing corresponding to the highest reception level.

In step 4, when time tracking and measurement of the reception levels corresponding to three base stations 102 to 104 are performed hereafter, steps 1 to 3 above are repeated.

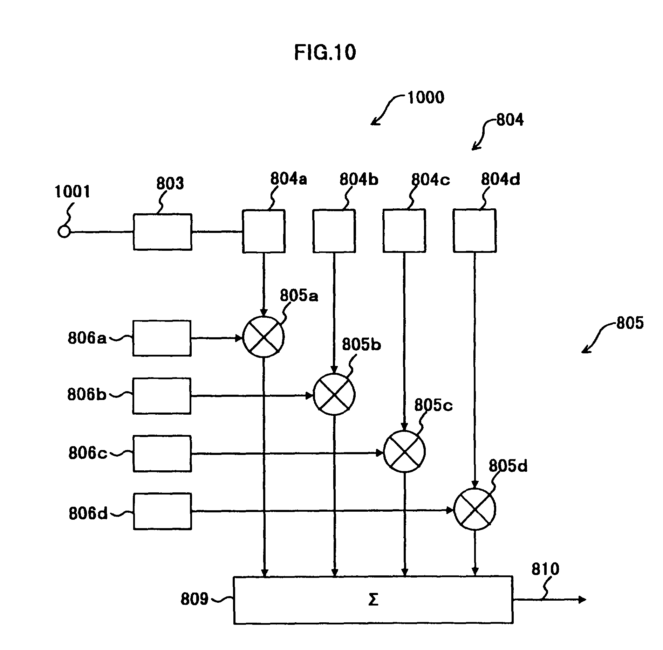

Then, FIG.10 shows a configuration of matched filter 1000 when the number of taps is 4 and a detailed explanation of the operation is given below.

The received signal (spread signal) retained by spread data retaining circuit 803 is input to taps 804a, 804b, 804c and 804d in storage circuit with taps 804. The outputs of taps 804a, 804b, 804c and 804d are multiplied through multipliers 805a, 805b, 805c and 805d in multiplication circuit 805 by reference spreading codes stored in tap coefficient storage circuits 806a, 806b, 806c and 806d. These multiplication results are added up by addition circuit 809 and the addition result is output as correlation value 810.

Here, suppose the reference spreading codes of the base station stored in tap coefficient storage circuits 806a to 806d are $C(0)$, $C(1)$, $C(2)$, $C(3)$, ... and the received signals input from input terminal 1001 are expressed as $x(0)$, $x(1)$, $x(2)$, $x(3)$, ... in time sequence. Then, the despreading processing operation is explained in steps 1 to 3 below.

In step 1, reference spreading codes $C(0)$ to $C(3)$ stored in tap coefficient storage circuit 806a to 806d and signals $x(0)$ to $x(3)$ of taps 804a to 804d are multiplied through multiplication circuits 805a to 805d and the multiplication results are added up by addition circuit 809.

In this case, the signal output as correlation value 810 is given in aforementioned expression (1).

In step 2, suppose the reference spreading codes remain unchanged and a new received signal $x(4)$ is input to storage circuit with taps 804. Then, taps 804a to 804d contain $x(1)$, $x(2)$, $x(3)$ and $x(4)$, respectively.

In this case, the signal output as correlation value 810 is given in aforementioned expression (2).

In step 3, suppose the spreading codes remain unchanged and a new received signal $x(5)$ is input to storage circuit with taps 804. Then, taps 804a to 804d contain $x(2)$, $x(3)$ and $x(4)$ and $x(5)$, respectively.

In this case, the signal output as correlation value 810 is given in aforementioned expression (3).

Such steps 1 to 3 are repeated, outputting correlation values 810 sequentially. Mobile station 105 can recognize the level of correlation between signals at each time using these correlation values 810 and as shown in curve 701 in FIG.7, mobile station 105 can create a delay profile showing the relationship between a delay time of a wave received from a base station and reception level.

As shown above, despreading circuit 800 in the CDMA reception apparatus according to Embodiment 1 is designed to carry out despreading processing by retaining spread data output from radio section 801, then stopping the operation of radio section 801 under the control of control section 802, multiplying the retained spread data and pre-stored reference spreading codes of perch channels of a plurality of base stations sequentially and adding up these multiplication results.

Using the result of this despreading processing and maintaining synchronization as in the case of the conventional apparatus, it is possible to measure the reception levels of perch channels ch1 to ch3. Moreover, it is also possible to perform time tracking by gradually shifting points at which signals are received and detecting the timing corresponding to the highest reception level.

This requires radio section 801 to receive spread data from the base station only once, making it possible to shorten the time required to operate radio section 801 and thus reduce power consumption.

Moreover, even if the number of base stations increases, radio section 801 needs to carry out reception operation only once, and thus the time required to operate radio section 801 will not increase. This prevents power consumption of radio section 801 from increasing.

Furthermore, in Embodiment 1, the reception levels of different base stations are measured using different reference spreading codes for spread data received by same radio section 801.

In a mobile communication environment, the wave propagation condition is generally changing all the time due to fading. However, Embodiment 1 compares waves from a plurality of base stations using the waves received from those base stations at the same time.

Thus, it is possible to find more accurate relative values between the base stations even if the operation of radio section 801 is stopped when the spread data are retained by spread data retaining circuit 803. When the mobile station carries out handover or sends/receives a call, this allows the mobile station to determine the base station with which to enter into communication based on more accurate information on reception levels and timing positions, enabling the mobile station to communicate with a more appropriate base station.

On the other hand, if the mobile station has mistakenly entered into communication with a base station with a low reception level, the mobile station must carry out transmission with stronger transmission power than that of the base station with the highest reception level, which will increase power consumption of the transmission system in the mobile station. Furthermore, the mobile station transmitting with stronger transmission power will increase interference with the same cell, which will reduce the efficiency of frequency utilization.

However, as described above, Embodiment 1 allows the mobile station to determine with which base station to enter into communication based on more accurate information, making it possible to reduce power consumption of the transmission system in the mobile station. This makes it possible to implement a mobile station capable of realizing a system with higher efficiency of frequency utilization.

Moreover, the times corresponding to step 2 and step 3 of Embodiment 1 shown in FIG.9 are not the times during which radio waves from the mobile station are received by air, but the times only dependent on the time when the LSI of the mobile station is operating. Thus, it is possible to operate the mobile station at an arbitrary operating frequency.

Increasing the operation speed of the LSI allows the operation time to be shortened, making it possible to measure reception levels and timing positions of more base stations.

Detecting reception levels and timing positions of more base stations will make it possible to reduce the frequency of updating the list of base stations on the other end of communication (control table 201) shown in FIG.2 from the beginning.

Updating the base station list from the beginning requires the radio section to be operated for a long time, increasing power consumption. However, the present embodiment can reduce the frequency of updating the base station list from the beginning, thus reducing power consumption.

By reducing the frequency of updating the base station list from the beginning, it is also possible to reduce the LSI operation speed. Slowing down the LSI operation speed allows the entire apparatus to be operated at a lower voltage, thus reducing power consumption. That is, power consumption of the CMOS circuit incorporated in the apparatus is proportional to the square of a voltage, operating this CMOS circuit at a low voltage can effectively reduce power consumption of the entire apparatus.

Furthermore, despreading circuit 800 of Embodiment 1 creates a delay profile by changing the phase of a code for the same reception data stored by spread data retaining circuit 803. Therefore, the radio status at different phase points in the delay profile become identical. As a result, relative values at different phase points of a delay profile become more accurate, allowing the mobile station to create a more accurate delay profile. This allows the mobile station to perform more accurate time tracking.

Generally, a CDMA receiver performs RAKE reception receiving different delay waves separately. Here, the separately received delay waves are called "fingers." Since the present embodiment performs more accurate time tracking, more accurate timings can be assigned to these fingers. This improves the reception performance of the CDMA receiver.

Improving the reception performance of the apparatus on the receiving side can reduce transmission power of the apparatus on the transmitting side. This allows the apparatus on the transmitting side (base station) to reduce power consumption. Furthermore, reducing transmission power at the apparatus on the transmitting side can reduce interference with other codes. This allows more efficient utilization of frequencies and more communications.

On the other hand, when creating a delay profile for another base station, the reference spreading codes stored in tap coefficient storage circuits 806a to 806d shown in FIG.10 are D(0), D(1), D(2) and D(3), respectively. Then, spread data retaining circuit 803 sequentially provides x(0), x(1), x(2) and x(3) as received signals and the mobile station creates a delay profile.

Thus, when creating delay profiles of a plurality of base stations, the mobile station does not newly perform reception, and thus the operation time of radio section 801 does not increase even if the number of base stations increases.

Furthermore, it is also possible for the mobile station to receive data only corresponding to the time period during which information of standby channels received on standby is carried and retain the received data as the data prior to despreading. In this case, the mobile station need not additionally operate the radio section to perform time tracking and measure reception levels of other base stations, making it possible to further reduce power consumption.

When creating delay profiles in the present embodiment, spread data retaining circuit 803 retains spread data, but the same effect can be produced by even eliminating spread data retaining circuit 803 and making storage circuit with taps 804 retain spread data.

(Embodiment 2)

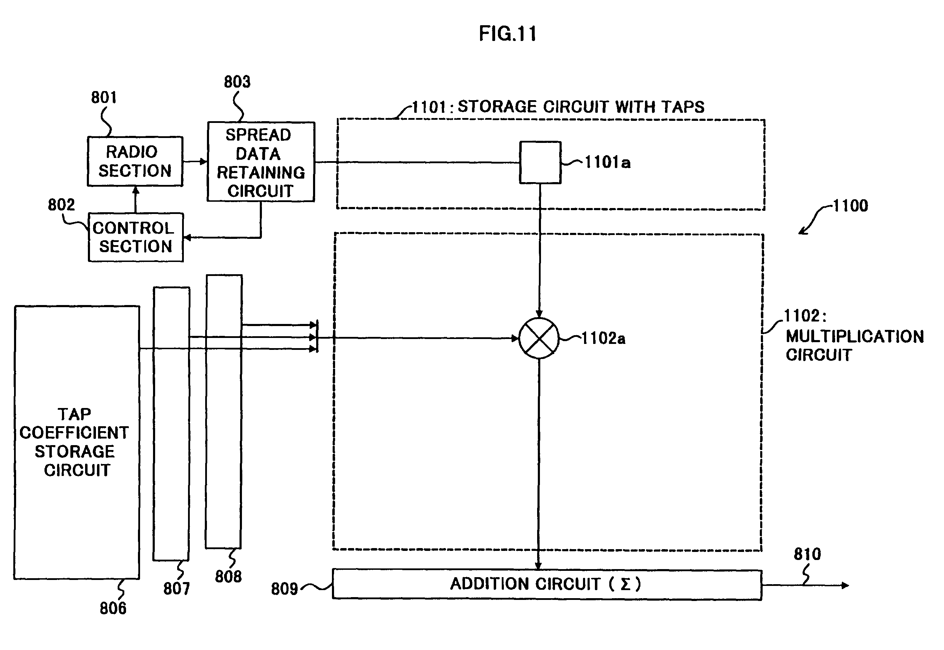

FIG.11 is a block diagram showing a configuration of a CDMA reception apparatus according to Embodiment 2 of the present invention. The sections in the configuration in FIG.11 which are common to those of Embodiment 1 (FIG.8) are assigned the same numbers and their explanations are omitted.

A feature of the CDMA reception apparatus according to Embodiment 2 shown in FIG.11 is that the number of taps 1101a of storage circuit with taps 1101 is 1 and the number of multipliers 1102a of multiplication circuit 1102 is 1.

In FIG.11, the spread data received by radio section 801 are retained by spread data retaining circuit 803. When these spread data are retained, control section 802 stops radio section 801.

The spread data retained by spread data retaining circuit 103 are stored in tap 1101a, which is a recording means of storage circuit with taps 1101, one data piece from one symbol at a time.

The output code from this tap 1101a is multiplied through multiplier 1102a of multiplication circuit 1102 by one of a reference spreading code (tap coefficient) of perch channel ch1 stored in tap coefficient storage circuit 806, reference spreading code of perch channel ch2 stored in tap coefficient storage circuit 807 and reference spreading code of perch channel ch3 stored in tap coefficient storage circuit 808.

This multiplication is performed as follows, for example: One bit of a 1-symbol reference spreading code is read from tap coefficient storage circuit 806 and this one bit read is multiplied by a 1-bit code of tap 1101a. This multiplication result is output to addition circuit 809. Furthermore, one bit of the next reference spreading code is read from tap coefficient storage circuit 806 and this one bit read is multiplied by the next 1-bit code stored in tap 1101a. This multiplication result is output to addition circuit 809. Hereafter, the bits that were sequentially read from tap coefficient storage circuit 806 and 1-bit codes that were sequentially stored in tap 1101a are multiplied by one data piece at a time until the addition result by addition circuit 809 becomes 1 symbol.

Then, the 1-symbol multiplication results are added by addition circuit 809 and the addition result is output as correlation value 810 to a processing circuit in the subsequent stage, which is not shown in the figure.

As shown above, the CDMA reception apparatus according to Embodiment 2 has a configuration capable of performing despreading processing with one tap 1101a of storage circuit with taps 1101 and one multiplier 1102a of multiplication circuit 1102, making it possible to reduce the circuit scale of despreading circuit 1100. This makes it possible to reduce the size of the CDMA reception apparatus and reduce the manufacturing cost of the CDMA reception apparatus.

Moreover, since radio waves received by air have already been retained by spread data retaining circuit 803, it is possible to reduce power consumption of the CDMA reception apparatus above by reducing the operation speed of the CDMA reception apparatus.

The embodiment above explained the case where the number of taps 1101a of storage circuit with taps 1101 is 1 and the number of multipliers 1102a of multiplication circuit 1102 is 1, but the present invention is also applicable to a configuration with the number of taps and multipliers set to 2, 3 or greater carrying out despreading processing by multiplying every 2, 3 or more bits.

(Embodiment 3)

A method of identifying code types in a CDMA reception apparatus according to Embodiment 3 of the present invention is explained below. In the present embodiment, despreading circuit 1000 shown in FIG.10 is used for reference.

Since the phase of a long code has been detected by an a priori signal (described in the publication already explained in the conventional example), received signals whose phase is known $x(0)$, $x(1)$, $x(2)$ and $x(3)$ are received.

However, since their code types are unknown, a plurality of types of reference spreading codes to be stored in tap coefficient storage circuits 806a to 806d are set. The setting can be done such as a series of $C(0)$, $C(1)$, $C(2)$, $C(3)$, a series of $D(0)$, $D(1)$, $D(2)$, $D(3)$ and a series of $E(0)$, $E(1)$, $E(2)$, $E(3)$, ... and so on.

As seen above, the code type identification method in the CDMA reception apparatus according to Embodiment 3 measures the level of correlation with a plurality of codes for a same received signal, making the reception conditions between reference codes identical and making relative values between reference codes more accurate. This reduces the frequency of erroneous synchronization.

Moreover, for a signal received by radio section 801, the operation of switching a plurality of codes and referencing those codes has nothing to do with the time required to receive signals by air, and thus it is possible to improve the operation speed according to the progress of LSI process. As a result, the lead-in time can be further shortened.

Embodiment 3 was explained with reference to the configuration in FIG.10, but in the case where the configuration of either Embodiment 1 or Embodiment 2 is used, as shown in the present embodiment, setting a plurality of types of reference spreading codes for the tap coefficient storage circuit will allow the same effects as those in the present embodiment to be obtained.

The despreading circuit in the CDMA reception apparatus of the present invention comprises retaining means for retaining a spread signal received by radio means, first storage means for arranging and storing the retained spread signal in time sequence, second storage means for storing spreading codes corresponding to communication parties, multiplication means for multiplying the spread signal stored in said first storage means by the spreading codes sequentially, and adding means for adding up the multiplication results by said multiplication means.

The present invention performs despreading processing using different spreading codes for a same spread signal retained by the retaining section, thus maintaining same radio conditions even if the air environment or the location of the CDMA reception apparatus changes or the apparatus is under the influence of fading. This makes it possible to accurately perform measurement of reception levels and time tracking and communicate with the transmission apparatus based on accurate information.

The despreading circuit in the CDMA reception apparatus of the present invention comprises first storage means for arranging and storing a spread signal received by radio means in time sequence, second storage means for storing spreading codes corresponding to communication parties, multiplication means for multiplying the spread signal stored in said first storage means by said spreading codes sequentially, and adding means for adding up the multiplication results by said multiplication means.

The present invention performs despreading processing using different spreading codes for a same spread signal retained by the first storage section, thus maintaining same radio conditions even if the air environment or the location of the CDMA reception apparatus changes or the apparatus is under the influence of fading. This makes it possible to accurately perform measurement of reception levels and time tracking and communicate with the transmission apparatus based on accurate information.

The despreading circuit in the CDMA reception apparatus of the present invention comprises retaining means for a retaining spread signal received by radio means, first storage means for reading and storing the retained spread signal by one data piece in time sequence, second storage means for storing spreading codes corresponding to communication parties, multiplication means for multiplying both the spread signal stored in said first storage means and the spreading codes by one data piece in time sequence, and adding means for adding up the multiplication results by said multiplication means.

The present invention can form the circuit with a configuration making both spread signals and their respective spreading codes multiplied by one data piece in time sequence, making it possible to reduce the size of the circuit and reduce the cost.

The despreading circuit in the CDMA reception apparatus of the present invention comprises retaining means for retaining a spread signal received by radio means, first storage means for reading and storing the retained spread signal by a predetermined number of bits in time sequence, second storage means for storing spreading codes corresponding to communication parties, multiplication means for multiplying the spread signal stored in said first storage means and the spreading codes by a predetermined number of bits in time sequence, and adding means for adding up the multiplication results by said multiplication means.

The present invention can form the circuit with a configuration making both spread signals and their respective spreading codes multiplied by a predetermined number of bits in time sequence, making it possible to reduce the size of the circuit while maintaining a certain operation speed and reduce the cost.

The despreading circuit in the CDMA reception apparatus of the present invention comprises control means that stops said radio means when said retaining means retains a spread signal.

The present invention can perform despreading processing after the retaining section retains the spread signal, making it possible to reduce power consumption.

The despreading circuit in the CDMA reception apparatus of the present invention comprises control means that stops said radio means when said first storage means retains a spread signal.

The present invention can perform despreading processing after stopping the radio section when the first storage section retains a spread signal, making it possible to reduce power consumption.

The matched filter used in the CDMA reception apparatus of the present invention comprises retaining means for retaining a spread signal received by radio means, first storage means for arranging and storing the retained spread signal in taps in time sequence, second storage means for storing tap coefficients corresponding to spreading codes of communication parties, multiplication means for multiplying the spread signal stored in taps by the tap coefficients sequentially, and
adding means for adding up the multiplication results by said multiplication means.

The present invention performs despreading processing using different tap coefficients for a same spread signal retained in the retaining section, thus maintaining same radio conditions even if the air environment or the location of the CDMA reception apparatus changes or the apparatus is under the influence of fading. This makes it possible to accurately perform measurement of reception levels and time tracking and communicate with the transmission apparatus based on accurate information.

The matched filter used in the CDMA reception apparatus of the present invention comprises first storage means for arranging and storing a spread signal received by radio means in taps in time sequence, second storage means for storing tap coefficients corresponding to spreading codes of communication parties, multiplication means for multiplying the spread signal stored in the taps by said tap coefficients sequentially, and adding means for adding up the multiplication results by said multiplication means.

The present invention performs despreading processing using different tap coefficients for a same spread signal retained in the first storage section, thus maintaining same radio conditions even if the air environment or the location of the CDMA reception apparatus changes or the apparatus is under the influence of fading. This makes it possible to accurately perform measurement of reception levels and time tracking and communicate with the transmission apparatus based on accurate information.

The matched filter used in the CDMA reception apparatus of the present invention comprises retaining means for retaining a spread signal received by radio means, first storage means for reading and storing the retained spread signal in taps by one data piece in time sequence, second storage means for storing tap coefficients corresponding to spreading codes of communication parties, multiplication means for multiplying the spread signal stored in taps and the tap coefficients by one data piece in time sequence, and adding means for adding up the multiplication results by said multiplication means.

The present invention can form the circuit with a configuration making both spread signals and their respective tap coefficients multiplied by one data piece in time sequence, making it possible to reduce both the size of the circuit and cost.

The matched filter used in the CDMA reception apparatus of the present invention comprises retaining means for retaining a spread signal received by radio means, first storage means for reading and storing the retained spread signal in taps by a predetermined number of bits in time sequence, second storage means for storing tap coefficients corresponding to spreading codes of communication parties, multiplication means for multiplying the spread signal with the predetermined number of bits stored in said taps and the tap coefficients by the predetermined number of bits in time sequence, and adding means for adding up the multiplication results by said multiplication means.

The present invention can form the circuit with a configuration making both spread signals and their respective tap coefficients multiplied by a predetermined number of bits in time sequence, making it possible to reduce the size of the circuit while maintaining a certain operation speed and reduce the cost as well.

The matched filter used in the CDMA reception apparatus of the present invention comprises control means for stopping said radio means when the retaining means retains a spread signal.

The present invention can perform despreading processing after stopping the radio section when the retaining section retains a spread signal, making it possible to reduce power consumption.

The matched filter used in the CDMA reception apparatus of the present invention comprises control means for stopping said radio means when said first storage means retains a spread signal.

The present invention can perform despreading processing after stopping the radio section when the first storage section retains a spread signal, making it possible to reduce power consumption.

The mobile station apparatus of the present invention comprises a despreading circuit in the CDMA reception apparatus of the present invention.

The mobile station apparatus of the present invention can achieve the same effects as those in the despreading circuit in one of the CDMA reception apparatuses above.

The mobile station apparatus of the present invention comprises a matched filter used in the CDMA reception apparatus of the present invention.

The mobile station apparatus of the present invention can achieve the same effects as those in the matched filter used in one of the CDMA reception apparatuses above.

The despreading method in the CDMA reception apparatus of the present invention retains a spread signal received by radio means, multiplies the retained spread signal by spreading codes corresponding to communication parties sequentially and adds up the multiplication results.

The present invention performs despreading processing using different spreading codes for a same spread signal retained, thus maintaining same radio conditions even if the air environment or the location of the CDMA reception apparatus changes or the apparatus is under the influence of fading. This makes it possible to accurately perform measurement of reception levels and time tracking and communicate with the transmission apparatus based on accurate information.

The reception level measurement method in the CDMA reception apparatus of the present invention establishes synchronization with a transmission apparatus using the addition result obtained by the despreading method in the CDMA reception apparatus above and measures reception levels after the synchronization.

The present invention measures reception levels between different transmission apparatuses applying different spreading codes to a same reception spread signal, maintaining the same radio conditions. As a result, the present invention can correctly measure reception levels from the transmission apparatuses.

The reception level measurement method in the CDMA reception apparatus of the present invention establishes synchronization with a base station apparatus using the addition result obtained by the despreading method in the CDMA reception apparatus above and measures reception levels after the synchronization.

The present invention measures reception levels between different base station apparatuses applying different spreading codes to a same reception spread signal, maintaining the same radio conditions. As a result, the present invention can correctly measure reception levels from the base station apparatuses.

The time tracking implementation method in the CDMA reception apparatus of the present invention performs time tracking using the reception level measurement result obtained by the reception level measurement method in the CDMA reception apparatus above.

The present invention performs time tracking from the measurement result of reception levels between different transmission apparatuses by applying different spreading codes to a same received spread signal, and thus the present invention makes a comparison by receiving radio waves from a plurality of transmission apparatuses at the same time. Since the present invention allows the relative values between transmission apparatuses to be obtained more accurately without stopping the radio section when the spread signal is retained, the present invention can determine with which transmission apparatus to enter into communication during handover or transmission/reception of a call, based on more accurate information on reception levels and timing positions, making it possible to enter into communication with a more appropriate transmission apparatus.

The time tracking implementation method in the mobile station apparatus of the present invention performs time tracking using the reception level measurement result obtained by the reception level measurement method in the CDMA reception apparatus above.

The present invention performs time tracking based on the measurement result of reception levels between different base station apparatuses by applying different spreading codes to a same received spread signal, and thus the present invention makes a comparison by receiving radio waves from a plurality of base station apparatuses at the same time. Since the present invention allows the relative values between base station apparatuses to be obtained more accurately without stopping the radio section when the spread signal is retained, the present invention can determine with which base station apparatus to enter into communication during handover or transmission/reception of a call, based on more accurate information on the reception level and timing position, making it possible to enter into communication with a more appropriate transmission apparatus.

The code identification method in the CDMA reception apparatus of the present invention retains a spread signal received by radio means when the phase of a code is known but the type of the code is unknown and multiplies the retained spread signal by different codes, thus identifies the type.

The present invention measures correlation between a same received spread signal and a plurality of codes, which makes the reception conditions between reference codes identical, providing more accurate relative values between reference codes. As a result, the present invention reduces the frequency of erroneous synchronization.

The present invention is not limited to the above described embodiments, and various variations and modifications may be possible without departing from the scope of the present invention.

This application is based on the Japanese Patent Application No.HEI 10-292545 filed on October 14, 1998, entire content of which is expressly incorporated by reference herein.

## Claims

1. A despreading circuit in a CDMA reception apparatus comprising:

   retaining means(803) for retaining a spread signal received by radio means;
   first storage means for arranging and storing the retained spread signal in time sequence;
   second storage means(806-808) for storing spreading codes corresponding to communication parties;
   multiplication means(805) for multiplying the spread signal stored in said first storage means by the spreading codes sequentially; and
   adding means(809) for adding up the multiplication results by said multiplication means.

2. A despreading circuit in a CDMA reception apparatus comprising:

   first storage means for arranging and storing a spread signal received by radio means in time sequence;
   second storage means(806-808) for storing spreading codes corresponding to communication parties;
   multiplication means(805) for multiplying the spread signal stored in said first storage means by said spreading codes sequentially; and
   adding means(809) for adding up the multiplication results by said multiplication means.

**3.** A despreading circuit in a CDMA reception apparatus comprising:

retaining means(803) for a retaining spread signal received by radio means;
first storage means(1101) for reading and storing the retained spread signal by one data piece in time sequence;
second storage means(806-808) for storing spreading codes corresponding to communication parties;
multiplication means(1102) for multiplying both the spread signal stored in said first storage means and the spreading codes by one data piece in time sequence; and
adding means(809) for adding up the multiplication results by said multiplication means.

**4.** A despreading circuit in a CDMA reception apparatus comprising:

retaining means(803) for retaining a spread signal received by radio means;
first storage means for reading and storing the retained spread signal by a predetermined number of bits in time sequence;
second storage means(806-808) for storing spreading codes corresponding to communication parties;
multiplication means for multiplying the spread signal stored in said first storage means and the spreading codes by a predetermined number of bits in time sequence; and
adding means(809) for adding up the multiplication results by said multiplication means.

**5.** The despreading circuit in the CDMA reception apparatus according to claim 1, comprising control means(802) that stops said radio means when said retaining means(803) retains a spread signal.

**6.** The despreading circuit in the CDMA reception apparatus according to claim 2, comprising control means that stops said radio means when said first storage means retains a spread signal.

**7.** A matched filter used in a CDMA reception apparatus comprising:

retaining means(803) for retaining a spread signal received by radio means;
first storage means(804) for arranging and storing the retained spread signal in taps in time sequence;
second storage means(806-808) for storing tap coefficients corresponding to spreading codes of communication parties;
multiplication means(805) for multiplying the spread signal stored in taps by the tap coefficients sequentially; and
adding means(809) for adding up the multiplication results by said multiplication means.

**8.** A matched filter used in a CDMA reception apparatus comprising:

first storage means for arranging and storing a spread signal received by radio means in taps in time sequence;
second storage means(806-808) for storing tap coefficients corresponding to spreading codes of communication parties;
multiplication means(805) for multiplying the spread signal stored in the taps by said tap coefficients sequentially; and
adding means(809) for adding up the multiplication results by said multiplication means.

**9.** A matched filter used in a CDMA reception apparatus comprising:

retaining means(803) for retaining a spread signal received by radio means;
first storage means(1101) for reading and storing the retained spread signal in taps by one data piece in time sequence;
second storage means(806-808) for storing tap coefficients corresponding to spreading codes of communication parties;
multiplication means(1102) for multiplying the spread signal stored in taps and the tap coefficients by one data piece in time sequence; and
adding means(809) for adding up the multiplication results by said multiplication means.

**10.** A matched filter used in a CDMA reception apparatus comprising:

retaining means(803) for retaining a spread signal received by radio means;
first storage means for reading and storing the retained spread signal in taps by a predetermined number of bits in time sequence;
second storage means(806-808) for storing tap coefficients corresponding to spreading codes of communication parties;
multiplication means for multiplying the spread signal with the predetermined number of bits stored in said taps and the tap coefficients by the predetermined number of bits in time sequence; and
adding means(809) for adding up the multiplication results by said multiplication means.

**11.** The matched filter used in the CDMA reception apparatus according to claim 7, comprising control means(802) for stopping said radio means when the retaining means(803) retains a spread signal.

12. The matched filter used in the CDMA reception apparatus according to claim 8, comprising control means for stopping said radio means when said first storage means retains a spread signal.

13. A mobile station apparatus comprising a despreading circuit in a CDMA reception apparatus, the despreading circuit in the CDMA reception apparatus comprising:

retaining means(803) for retaining a spread signal received by radio means;
first storage means for arranging and storing the retained spread signal in time sequence;
second storage means(806-808) for storing spreading codes corresponding to communication parties;
multiplication means(805) for multiplying the spread signal stored in said first storage means by the spreading codes sequentially; and
adding means(809) for adding up the multiplication results by said multiplication means.

14. A mobile station apparatus comprising a matched filter used in a CDMA reception apparatus, wherein the matched filter used in the CDMA reception apparatus comprises:

retaining means(803) for retaining a spread signal received by radio means;
first storage means(804) for arranging and storing the retained spread signal in taps in time sequence;
second storage means(806-808) for storing tap coefficients corresponding to spreading codes of communication parties;
multiplication means(805) for multiplying the spread signal stored in the taps by the tap coefficients sequentially; and
adding means(809) for adding up the multiplication results by said multiplication means.

15. A despreading method in a CDMA reception apparatus, said method comprising the steps of:

retaining a spread signal received by radio means;
multiplying the retained spread signal by spreading codes corresponding to communication parties sequentially; and
adding up the multiplication results.

16. A reception level measurement method in a CDMA reception apparatus, said method comprising the steps of:

establishing synchronization with a transmission apparatus using the addition result obtained by the despreading method in the CDMA reception apparatus according to claim 15; and
measuring reception levels after the synchronization.

17. A reception level measurement method in a mobile station apparatus, said method comprising the steps of:

establishing synchronization with a base station apparatus using the addition result obtained by the despreading method in the CDMA reception apparatus according to claim 15; and
measuring reception levels after the synchronization.

18. A time tracking implementation method in a CDMA reception apparatus, said method comprising the step of:

performing time tracking using the reception level measurement result obtained by the reception level measurement method in the CDMA reception apparatus according to claim 16.

19. A time tracking implementation method in a mobile station apparatus, said method comprising the step of performing time tracking using the reception level measurement result obtained by the reception level measurement method in the CDMA reception apparatus according to claim 16.

20. A code identification method in a CDMA reception apparatus, said method comprising the steps of:

retaining a spread signal received by radio means when the phase of a code is known but the type of the code is unknown; and
multiplying the retained spread signal by different codes, thus identifying the type.

## FIG.1

EP 0 994 571 A2

## FIG.2

201: CONTROL TABLE

| PERCH CHANNEL | PERCH CHANNEL RECEPTION LEVEL | RECEPTION TIMING |
|---|---|---|
| ch1 | 20dB | 200 |
| ch2 | 12dB | 21 |
| ch3 | 8dB | 50 |
| ch4 | −3dB | 75 |
| ⋮ | ⋮ | ⋮ |

EP 0 994 571 A2

## FIG.3

105: MOBILE STATION

301 302(BPF) 303 305(AGC) 307(QUASI-COHERENT DETECTOR) 308(A/D) 309(A/D) 304 306 SPREAD SIGNAL DESPREAD SIGNAL 310: DESPREADING CIRCUIT SPREADING CODE GENERATOR 311(DEMODULATOR) INFORMATION DATA I Q

EP 0 994 571 A2

# FIG.4

403: STORAGE CIRCUIT WITH TAPS

403a  403b  403c  403m  403n

402

405

401:
MATCHED FILTER
(DESPREADING CIRCUIT)

404a

404b

404c

404:
MULTIPLICATION
CIRCUIT

TAP
COEFFICIENT
STORAGE
CIRCUIT

404m

404n

406    ADDITION CIRCUIT( Σ )    407    408

EP 0 994 571 A2

## FIG.5

TIME →

|  | STEP 1 | STEP 2 | STEP 3 | STEP 4 |
|---|---|---|---|---|

**501:**
**RADIO SECTION**
**OUTPUT**

**502:**
**DESPREADING**
**PROCESSING**

| DESPREADING USING PERCH ch1 CODE | DESPREADING USING PERCH ch2 CODE | DESPREADING USING PERCH ch3 CODE | DESPREADING USING PERCH ch1 CODE |
|---|---|---|---|

EP 0 994 571 A2

FIG.6

EP 0 994 571 A2

EP 0 994 571 A2

## FIG.7

RECEPTION LEVEL

701

DELAY TIME

## FIG.8

804: STORAGE CIRCUIT WITH TAPS

800: MATCHED FILTER (DESPREADING CIRCUIT)

805: MULTIPLICATION CIRCUIT

RADIO SECTION

SPREAD DATA RETAINING CIRCUIT

CONTROL SECTION

TAP COEFFICIENT STORAGE CIRCUIT

ADDITION CIRCUIT (Σ)

EP 0 994 571 A2

# FIG.9

TIME →

|  | STEP 1 | STEP 2 | STEP 3 | STEP 4 |
|---|---|---|---|---|
| RADIO SECTION OUTPUT | ▓▓▓ | | | ▓▓▓ |
| SPREAD DATA RETAINING CIRCUIT | ▓▓▓ | | | ▓▓▓ |
| DESPREADING PROCESSING | DESPREADING USING PERCH ch1 CODE | DESPREADING USING PERCH ch2 CODE | DESPREADING USING PERCH ch3 CODE | DESPREADING USING PERCH ch1 CODE |

EP 0 994 571 A2

FIG.10

EP 0 994 571 A2

FIG.11

801 — RADIO SECTION

803 — SPREAD DATA RETAINING CIRCUIT

802 — CONTROL SECTION

1101: STORAGE CIRCUIT WITH TAPS

1101a

1100

1102a

1102: MULTIPLICATION CIRCUIT

TAP COEFFICIENT STORAGE CIRCUIT

807

808

806

809 — ADDITION CIRCUIT ( Σ )

810